(19) Europäisches Patentamt / European Patent Office / Office européen des brevets

(11) **EP 1 796 263 A1**

(12) **EUROPEAN PATENT APPLICATION**

(43) Date of publication:
**13.06.2007 Bulletin 2007/24**

(51) Int Cl.:
*H02P 21/14* (2006.01)     *G05B 13/02* (2006.01)
*G05B 13/04* (2006.01)     *H02P 23/00* (2006.01)

(21) Application number: **06025361.4**

(22) Date of filing: **07.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.12.2005 JP 2005358016**

(71) Applicant: **FANUC LTD
Minamitsuru-gun,
Yamanashi 401-0597 (JP)**

(72) Inventors:
• **Iwashita, Yasusuke
Fujiyoshida-shi
Yamanashi 403-0003 (JP)**
• **Okita, Tadashi
Fujiyoshida-shi
Yamanashi 403-0005 (JP)**
• **Sugiyama, Kazuyuki
FANUC Dai3virakaramatsu
Minamitsuru-gun
Yamanashi 401-0511 (JP)**

(74) Representative: **Thum, Bernhard
Wuesthoff & Wuesthoff
Patent- und Rechtsanwälte
Schweigerstrasse 2
81541 München (DE)**

(54) **Time constant automatic estimation method, time constant automatic estimation apparatus and servo motor control system**

(57) A time constant automatic estimation apparatus for automatically estimating a time constant at a time of acceleration of a servo motor including: an electric current value detection section for detecting a peak electric current value when the servo motor is operated in acceleration using a provisional time constant provided in advance for a test operation; and a time constant estimation section for estimating a actual time constant when the servo motor is actually driven at a desired target electric current value at a time of an actual operation, from a relation between the peak electric current value and the provisional time constant.

EP 1 796 263 A1

**Description**

RELATED APPLICATION

The present application is based on, and claims priority from, Japanese Application Number 2005-358016, filed December 12, 2005, the disclosure of which is hereby incorporated, by reference, in its entirety

BACKGROUND OF THE INVENTION

1. Field of the Invention

The present invention relates to a time constant automatic estimation method and a time constant automatic estimation apparatus, and to a servo motor control system, for automatically estimating a time constant of a servo motor as a driving source of a machine tool or a robot by running a loaded operating program.

2. Description of the Related Art

When, for example, a machine tool or a robot shipped from a factory or the like is to be assembled on site, it is required to set a time constant for a servo motor that drives a tool slide or a robot arm, at the time of acceleration or deceleration. It may also become necessary to set a time constant again in case of design change of the movable structure to be driven. In such a case, in general, a time constant is set such that the performance of the servo motor, within the range of the permissible torque of the servo motor, is optimized.

A method and apparatus for estimating parameters of a servo motor by running a loaded operating program is disclosed Japanese Unexamined Patent Publications 2004-74357 (JP-A-2004-74357) and 09-149670 (JP-A-09-149670). JP-A-2004-74357 discloses a method and apparatus for optimizing driving operation of a servo motor by specifying servo parameters according to the amount of mass of the objects mounted on the movable structure moving on an axis. Servo parameters such as a time constant and gain are specified from the parameter data corresponding to the load range store in advance in the memory of the apparatus, based on actual load detected by a test operation of the movable structure with a desired mass object mounted thereon.

JP-A-09-149670 discloses a method and apparatus for automatically calculating the load inertia and, from the result of the calculation, automatically adjusting the gain parameter. It also discloses calculation of the load inertia by measuring a time until a velocity reaches from 10% to 63% of the velocity step command value while the velocity control gain is being adjusted, and using the time constant thus obtained.

The conventional method and apparatus, as disclosed in JP-A-2004-74357, sets the time constant corresponding to the amount of load mounted on the movable structure based on the load data detected at the time of test operation of the movable structure. However, it is very difficult to provide in advance the parameter data corresponding to the load range. Further, the relation of parameter data and the load range cannot be determined uniformly, and parameter data corresponding to load range needs to be determined for each specification of the machine tool or the robot and, therefore, preparatory work for adjusting the time constant becomes burden some.

In the conventional method and apparatus disclosed in JP-A-09-149670, a gain parameter is automatically adjusted based on the calculated result of load inertia. However, there is a problem that, in order to determine the gain parameter with higher accuracy, the precise load inertia must be calculated using a time constant measured under the prescribed condition, and the gain parameter cannot be easily adjusted. As the accuracy of the load inertia calculation is limited, as a final compromise, the time constant is determined using a trial-and-error procedure so as to obtain a maximum electric current while observing electric current value (electric current value of electric current command or electric current value of electric current feedback). Therefore, a time constant that can provide the required performance of the servo motor cannot be easily determined.

SUMMARY OF THE INVENTION

In view of above-described problem, it is an object of the present invention to provide a time constant automatic estimation method and apparatus, and a servo motor control system, that is capable of estimating a time constant easily by a simple calculation without requiring much labor or time for the adjustment of the time constant and is thus capable of mitigating the work load at the time of adjusting servo motor.

To accomplish the above objects, the present invention, which provides a time constant automatic estimation method, for automatically estimating a time constant at a time of acceleration of a servo motor, including: detecting a peak electric current value when said servo motor is operated in acceleration using a provisional time constant provided in advance for a test operation; and estimating an actual time constant when said servo motor is actually driven at a desired target electric current value at a time of an actual operation, from a relation between the peak electric current value and said provisional time constant.

Further, the present invention, which provides a time constant automatic estimation apparatus for automatically estimating a time constant at a time of acceleration of a servo motor, including: an electric current value detection section for detecting a peak electric current value when said servo motor is operated in acceleration using a provisional time constant provided in advance for a test operation; and a time constant estimation section for estimating a actual time constant when said servo motor is actually driven at a desired target electric current value at a time of an actual operation, from a relation between said peak electric current value and said provisional time constant.

According to the present invention, taking account of proportionality between electric current value and torque of a servo motor, it is possible to determine, by simple calculation based on proportionality, the time constant required to supply a target electric current at the time of actual operation, by conducting a test operation of a servo motor using a provisional time constant provided in advance and determining the relation between the peak electric current value detected from the current waveform of the servo motor and the provisional time constant. Thus, it is possible to save the time required for adjustment of the time constant and to mitigate work burden at the time of servo motor adjustment. By using the time constant estimated in this way at the time of actual operation, performance of the servo motor can be optimized.

BRIEF DESCRIPTION OF THE DRAWINGS

These and other objects and features of the present invention will become clearer from the following description of the preferred embodiments given with reference to the attached drawings, wherein:

Fig. 1 is a view showing the construction of a servo motor control system according to an embodiment of the present invention;

Fig. 2 is a block diagram useful for explaining the construction of the servo motor control system shown in Fig. 1;

Fig. 3 is a flow chart showing a first time constant automatic estimation method using the time constant automatic estimation apparatus shown in Fig. 2;

Fig. 4A is a schematic view showing an electric current waveform at the time of the test operation of the time constant automatic estimation method shown in Fig. 3;

Fig. 4B is a schematic view showing an electric current waveform at the time of the actual operation of the time constant automatic estimation method shown in Fig. 3;

Fig. 5A is an actual view showing an electric current waveform at the time of the test operation of the time constant automatic estimation method shown in Fig. 3;

Fig. 5B is an actual view showing an electric current waveform at the time of the actual operation of the time constant automatic estimation method shown in Fig. 3;

Fig. 6 is a flow chart showing a second time constant automatic estimation method;

Fig. 7A is a schematic view showing an electric current waveform at the time of the test operation of the time constant automatic estimation method shown in Fig. 6;

Fig. 7B is a schematic view showing an electric current waveform at the time of the actual operation of the time constant automatic estimation method shown in Fig. 6;

Fig. 8 is a flow chart showing a third time constant automatic estimation method;

Fig. 9A is a schematic view showing an electric current waveform at the time of the test operation of the time constant automatic estimation method shown in Fig. 8;

Fig. 9B is a schematic view showing an electric current waveform at the time of the test operation using an estimated time constant;

Fig. 9C is a schematic view showing an electric current waveform at the time of the actual operation using an estimated time constant obtained by multiplying the estimated time constant by a coefficient;

Fig. 10 is a flow chart showing a fourth time constant automatic estimation method;

Fig. 11A is a schematic view showing an electric current waveform at the time of the test operation of the time constant automatic estimation method shown in Fig. 10 ;

Fig. 11B is a schematic view showing an electric current waveform at the time of the test operation using an estimated time constant;

Fig. 11C is a schematic view showing an electric current waveform at the time of the actual operation using an estimated time constant obtained by multiplying the estimated time constant by a coefficient; and

Fig. 12 is a view showing the construction of a variant of a servo motor control system according to the present invention.

DETAILED DESCRIPTION

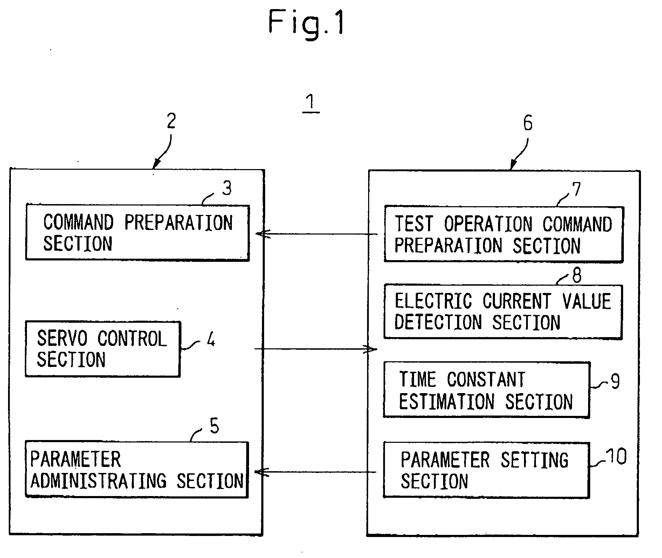

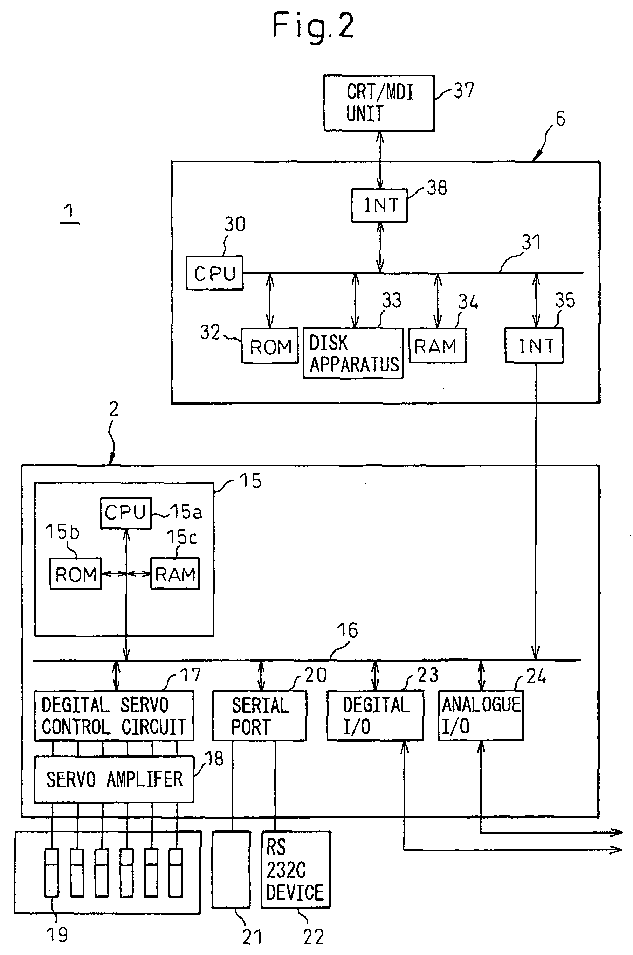

A servo motor control system according to an embodiment of the present invention will be described below with reference to Figs. 1 and 2. As shown in Fig. 1, a servo motor control system 1 is composed of an NC control apparatus 2 for controlling a servo motor which drives a tool slide (object to be driven) of a machine tool in a straight line, and a time constant automatic estimating apparatus 6 for automatically estimating the time constant at the time of acceleration or deceleration of the servo motor 19. The NC control apparatus 2 and the time constant automatic estimating apparatus 6 are connected to each other via a signal line to send and receive programs and data. Whole processing system is composed of the servo motor control system 1 and unshown machine tools or robots or the like.

The NC control apparatus 2 functions in accordance with loaded operating programs, as a command preparation section 3 for preparing control command value to the servo motor 19, a servo control section 4 for controlling the servo motor 19, and a parameter managing section 5 for rewriting servo information such as the time constant, position and velocity, etc., and sending the servo information to the time constant automatic estimating apparatus 6.

In accordance with loaded operating programs, the time constant automatic estimation apparatus 6 functions as a test operation command preparation section 7 for preparing control command value to the servo motor 19 at the time of test operation, an electric current value detection section 8 for receiving electric current waveform from the NC control apparatus 2 and detecting a peak electric current value of electric current command or a peak electric current value of feedback electric current, a time constant estimation section 9 for estimating actual time constant $\tau$ ($\tau$2) at the time of actual control when the servo motor is actually operated at desired target electric current value, from the relation of the detected peak electric current value and the provisional time constant at the time of test operation, and a parameter sending section 10 for sending the estimated time constant $\tau$ to the parameter managing section 5 of the NC control apparatus 2.

Fig. 2 is a block diagram showing the servo motor control system 1. The NC control apparatus 2 comprises a processor board 15, a digital servo control circuit 17 and a servo amplifier 18. The processor board 15 comprises a central processing unit (CPU) 15a, ROM 15b, RAM 15c and unshown CMOS, and exchanges command values and data for the rest of the NC control apparatus 2 via a bus 16. CPU 15a controls the NC control apparatus 2 in accordance with the system program stored in ROM 15b. The system program executes preparation and edit processing of a program, regeneration processing for automatic operation, and adjustment processing of servo parameters.

Substantial part of RAM 15c constitutes non-volatile memory region and stores teaching data, position data (servo data), various settings, and various operating programs. A part of RAM 15c is used for temporary memory to store data for computation processing executed by CPU 15a. Unshown CMOS memory is backed up by an unshown battery, and is composed as non-volatile memory that retains the content of memory even when power of the NC control apparatus 2 is shut off. The CMOS memory stores the operating program and data inputted from a teaching control panel (CRT/MDI unit) 21 via a serial port 20.

The digital servo control circuit 17 comprises a shaft control circuit (not shown) for machine tool, and a spindle control circuit (not shown). Each control circuit is connected individually via the bus 16 to the processor board 15, and receives motion command value from CPU 15a. The servo amplifier 18 converts the motion command value given by the digital servo control circuit 17 to velocity command value for driving the servo motor 19. A servo motor 19 corresponding to individual axis incorporates a pulse coder (not shown) for detecting position, and a position signal from this pulse coder is fed back in the form of pulse train or serial transmission. In the case of pulse train, velocity data can be formed by (frequency/velocity) transformation, and in the case of serial transmission, velocity data can be obtained by determining differences in absolute position.

For example, the spindle control circuit receives main spindle rotation command value for the machine tool, and sends main spindle velocity command value to the main spindle amplifier. Upon reception of the spindle velocity command value, the main spindle amplifier rotates the main spindle motor at the commanded velocity. A position coder is connected to the main spindle motor via a gear or a belt, and the position coder outputs feedback pulses in synchronism with the rotation of the main spindle, and the feedback pulses are read by CPU 15a via an interface.

A position feedback signal, a velocity feedback signal, an electric current feedback signal, a feedback pulses, etc. are used as servo information. The electric current feedback signal is used for estimation of the time constant in the present invention.

Various input/output section and external memory device and external apparatus, etc. are connected to the bus 16 via unshown interface. The NC control apparatus 2 can read in operating programs from the external apparatus and can output edited programs to the external apparatus via this interface.

Besides, the serial port 20 is connected via a bus to the teaching control panel 21 and RS232 devices (communication interface) 22. The teaching control panel 21 is used to input programs such as operating programs, position data, various setting value, etc. A digital I/O (input/output device) 23 for digital signal, and an analog I/O (input/output device) 24 are also connected to the bus 16.

As the construction of the NC control apparatus 2 as described above is generally same as in a conventional known control apparatus, further explanation will be omitted.

Next, the time constant automatic estimation apparatus 6 will be described below. A processor 30 is a processor that controls the time constant automatic estimation apparatus 6, and via a bus 31, reads out the system program stored in ROM 32 and generally controls the time constant automatic estimation apparatus 6 in accordance with the system program. Various programs for predetermined operations to be executed by the servo motor 19 are stored in a memory device such as the disk device 33. Temporary computational data and display data and various data inputted by an operator via CRT/MDI unit 37 are stored in RAM 34. Data required for estimating the time constant can be stored in RAM 34.

In the memory device, such as the disk device 33, etc., an operating program has been loaded in advance for detecting a peak electric current value A at the time of accelerating operation of the servo motor 19 using a provisional time constant T provided in advance for a test operation, and for estimating an actual time constant (an optimized time constant) τ at the time of actual control using a desired target electric current value from the relation between the peak electric current value A and the provisional time constant T, to be executed by a computer. The program stored in the memory device is read out from the memory device, and transmitted to NC control apparatus 2. The interface 35 performs exchange of signals between the memory and NC control apparatus 2.

CRT/MDI unit 37 is a manual input device comprising a processor, a memory, a display, a keyboard, and the like. The interface 38 receives data from CRT/MDI unit 37, and sends them to the processor 30. CRT/MDI unit 37 carries out display processing based on data sent from the processor 30 and displays them on a display.

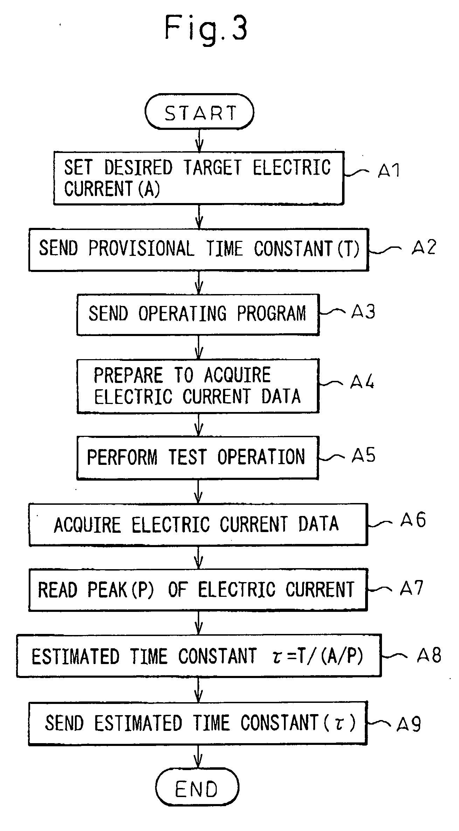

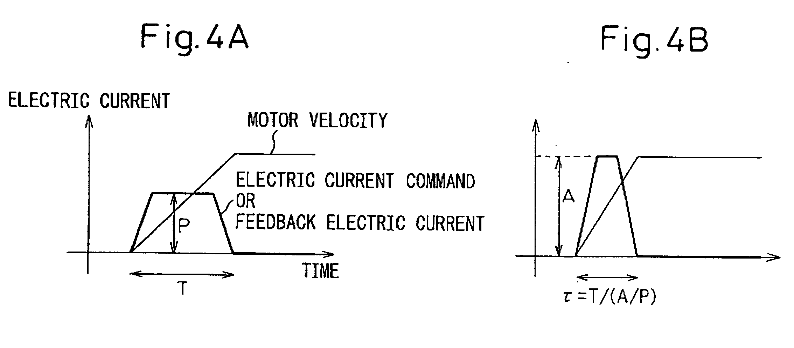

Next, a first time constant automatic estimation method using the time constant automatic estimation apparatus 6 will be described with reference to Figs. 3, 4A and 4B.

First, at step A1, the peak electric current value A at accelerating operation is set. At step A2, a provisional time constant T for test operation is sent to NC control apparatus 2. At step A3, an operating program for test operation is sent to NC control apparatus 2. After, at step A4, to prepare to acquire electric current data received from NC control apparatus 2, a test operation is carried out at step A5. At step A6, an electric current waveform of electric current command value or feedback electric current is received (acquired). At step A7, a peak electric current value P of the electric current command or a peak electric current value P of the feedback electric current is read from the received electric current waveform. At step A8, the time constant corresponding to the peak electric current value A at the time of acceleration in actual control is automatically calculated from the equation

$$\tau = T/(A/P),$$

where T is a provisional time constant, P is the peak electric current value detected at the time of test operation using the provisional time constant, and A is the desired target electric current value supplied at the time of actual control. In the above equation, the time constant τ is obtained by simple calculation based on proportionality, taking account of proportionality between electric current value and torque of a servo motor 19. At step A9, the time constant obtained is sent to NC control apparatus 2 and the processing is terminated.

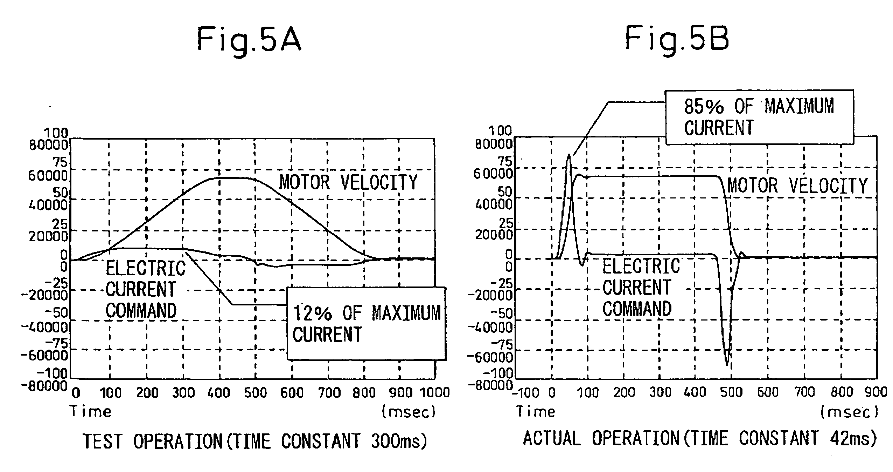

Fig. 5A is a view showing an actual electric current waveform at the time of test operation using the provisional time constant, and Fig. 5B is a view showing actual electric current waveform at the time of actual operation using the estimated time constant. In the Figure, motor velocity is shown together with the electric current waveform. It can be seen that electric current value of electric current command in order to obtain same motor velocity is different between Fig. 5A and Fig. 5B. In Fig. 5A, as a long time constant (300 ms) is employed, only 12% of the maximum electric current is used. In Fig. 5B, in contrast, a short time constant (42 ms) is employed in order to supply target electric current of 85% of the maximum electric current. Thus, by performing control using the time constant estimated in this way, maximum performance of the servo motor 19 can be realized and control with a short cycle time is possible.

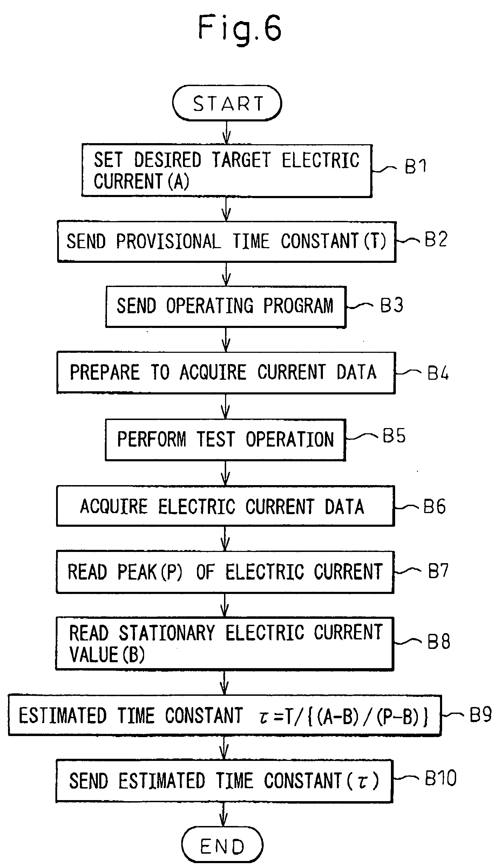

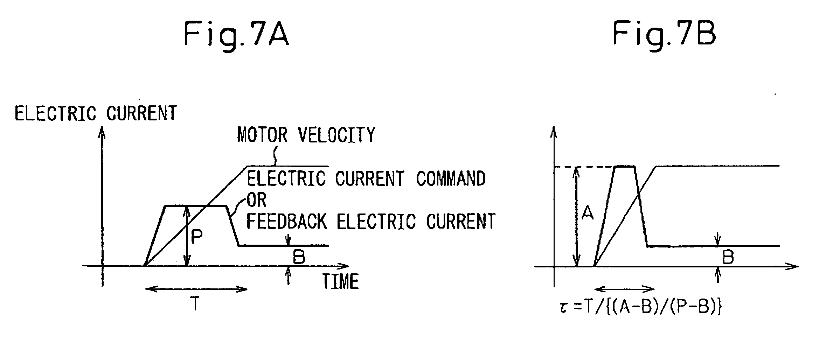

Next, a second time constant automatic estimation method using a time constant automatic estimation apparatus will be described with reference to Figs. 6, 7A and 7B. The time constant automatic estimation apparatus used has second electric current value detection section (not shown) for detecting a stationary electric current value, in addition to the construction element of the time constant automatic estimation apparatus 6 used in the first method.

As steps B1-B7 are same as steps A1-A7, a description is omitted. At step B8, a stationary electric current value B for the portion moving at a constant velocity is read by using the second electric current value detection section. At step B9, the stationary electric current value B is subtracted from the peak electric current value P to obtain a new peak electric current value, and the stationary electric current value B is subtracted from the desired target electric current value A to obtain a new target electric current value. The time constant τ corresponding to the peak electric current value A at the time of acceleration of in actual control is automatically calculated from the equation

$$\tau = T/((A-B)/(P-B)),$$

where T is the provisional time constant, P is the peak electric current value detected at the time of test operation using the provisional time constant, A is the desired target electric current value supplied at the time of actual operation, and B is the stationary electric current value. At step B10, the time constant obtained is sent to NC control apparatus 2 and the processing is terminated.

In accordance with the second time constant automatic estimation method, an accurate time constant can be obtained by eliminating an effect of friction.

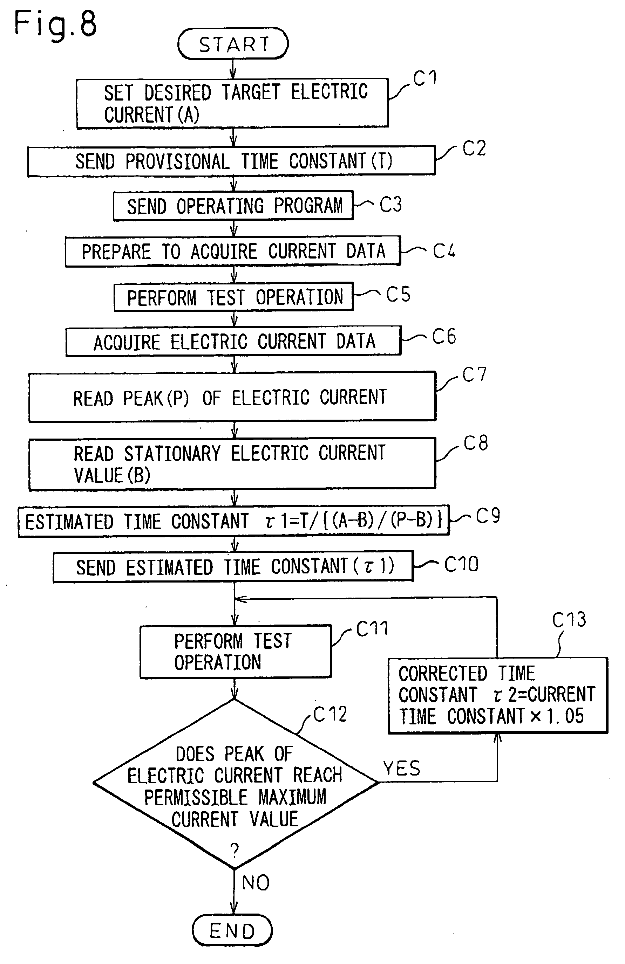

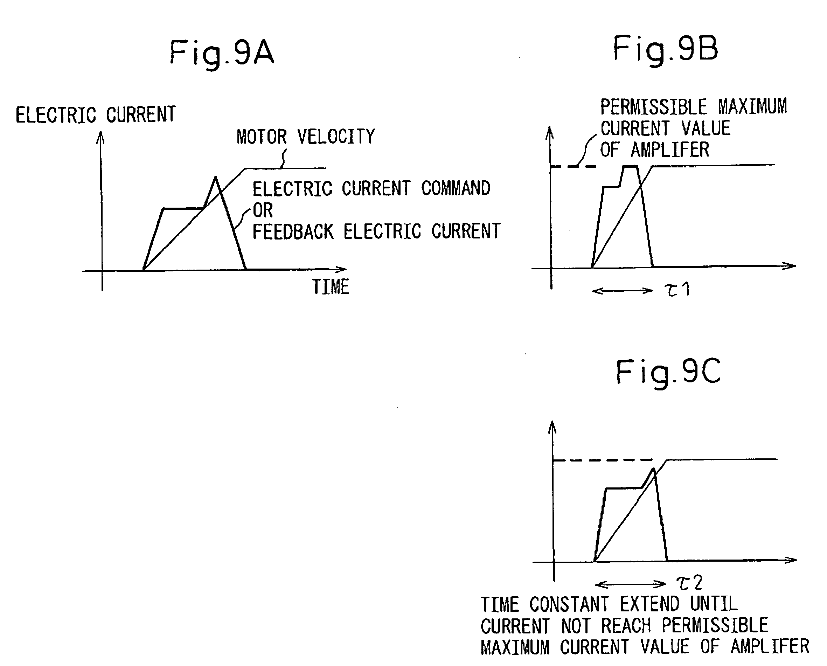

Next, a third time constant automatic estimation method using a time constant automatic estimation apparatus will be described with reference to Figs. 8, and 9A-9C. The time constant automatic estimation apparatus has an unshown peak electric current determination section (first determination section) for determining whether or not the peak electric current value reaches the permissible maximum electric current value of the servo amplifier, in addition to the time constant automatic estimation apparatus used in the second method.

First, at step C1, the peak electric current value A at the time of acceleration in actual operation is set as the permissible maximum electric current value. As steps C2-C10 are same as steps B2-B10, a description is omitted. At step C11, test operation is carried out, using the time constant $\tau 1$ estimated at step C10. At step C12, using the determination section, it is determined whether or not the peak electric current value reaches the permissible maximum electric current value of the servo amplifier. If the result of the determination is NO, processing is terminated, and if the result of the determination is YES, at step C13, a corrected (adjusted) time constant $\tau 2$ is obtained by multiplying the estimated time constant $\tau 1$ by a coefficient, and test operation is carried out again. Thereafter, this procedure is repeated until the result of the determination turns out to be NO.

**[0035]** Fig. 9A is a view showing an electric current waveform and a motor velocity waveform when a test operation is carried out, using the provisional time constant T. Fig. 9B is a view showing an electric current waveform and a motor velocity waveform when the time constant $\tau 1$ estimated by calculation is used. It is shown that the peak electric current value reaches the permissible maximum electric current value A of the amplifier (top of the electric current waveform is flat). Fig. 9C is a view showing an electric current waveform and a motor velocity waveform when the time constant $\tau 2$ estimated by calculation is used. It is shown that the peak electric current value does not reach the permissible maximum electric current value A of the amplifier (top of the electric current waveform is pointed).

In accordance with the third time constant automatic estimation method, the time constant $\tau 2$ can be estimated under the condition that the peak electric current value does not reach the permissible maximum electric current value A of the servo amplifier. Therefore, prolonged operation of the servo motor 19 under a large load can be avoided, and thermal damage to the servo motor and to the servo amplifier can be prevented.

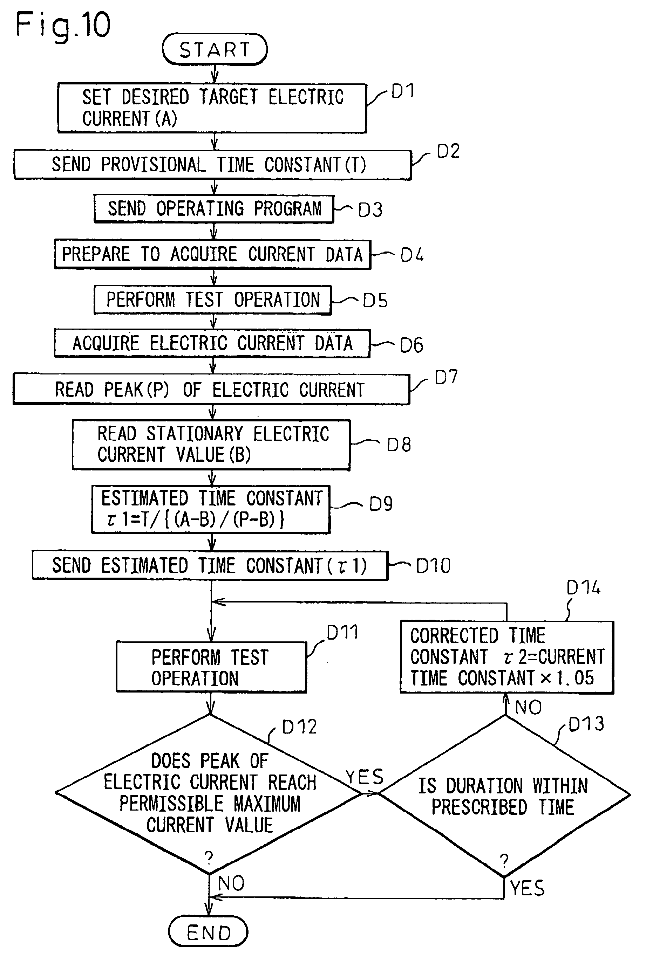

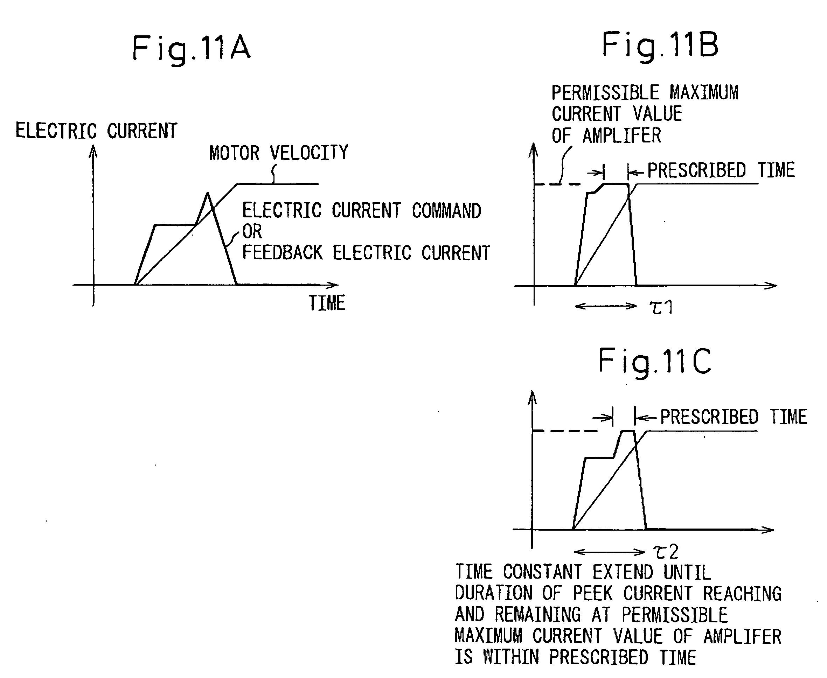

Next, a fourth time constant automatic estimation method using a time constant automatic estimation apparatus will be described with reference to Figs. 10 and 11A-11C. The time constant automatic estimation apparatus used has unshown duration determination section (second determination section) for measuring the duration of the peak electric current value reaching and remaining at the permissible maximum electric current value of the servo amplifier, and determining whether or not the duration is less than a prescribed time, in addition to the time constant automatic estimation apparatus used in the third method.

As steps D1-D12 are same as steps C1-C12, duplicated description is omitted. At step D13, duration determination section are used to measure the duration of the peak electric current value reaching and remaining at the permissible maximum electric current of the servo amplifier, and if the duration is less than prescribed time (YES), processing is terminated, and if the result of the determination is NO, at step D14, a corrected time constant $\tau 2$ is obtained by multiplying the estimated time constant $\tau 1$ by a coefficient, and at step D11, the test operation is carried out again. This procedure is repeated until the result of determination turns out to be YES.

Fig. 11A is a view showing an electric current waveform and a motor velocity waveform at the time of test operation using a provisional time constant. Fig. 11B is a view showing an electric current waveform and a motor velocity waveform when the time constant $\tau 1$ estimated by calculation is used. It is shown that the duration is more than the prescribed time. Fig. 11C is a view showing an electric current waveform and a motor velocity waveform when the corrected a time constant $\tau 2$ is used, and the duration is less than the prescribed time.

In accordance with the fourth time constant automatic estimation method, if the duration measured by the duration measuring section is equal to or greater than the prescribed time, the corrected time constant $\tau 2$ is determined from the estimated time constant $\tau 1$ in order to reduce the duration to a value less than the prescribed time. Thus, the servo motor can be controlled so as to exhibit maximum performance while keeping the position deviation and velocity deviation within a range that is not too large.

The present invention is not limited to above-described embodiment, but can be implemented in various modifications and variation without departing from the scope of the invention. The present embodiment is based on the premise that load inertia is same at the time of test operation using the provisional time constant as at the time of actual operation using the estimated time constant obtained by calculation. However, if the load inertia at the time of test operation is different from an load inertia at the time of actual operation, the estimated time constant can be corrected in accordance with the ratio of the load inertia at the time of test operation to the load inertia at the time of actual operation.

Thus, if, at the time of test operation (adjustment), the motor inertia is Jm (invariant), the machine inertia is JL1, and the provisional time constant is T1, and at the time of actual control (actual operation), the machine inertia is JL2, then, actual time constant at the time of actual operation can be obtained from the equation

$$\tau = T1 \cdot (Jm + JL2) / (Jm + JL1).$$

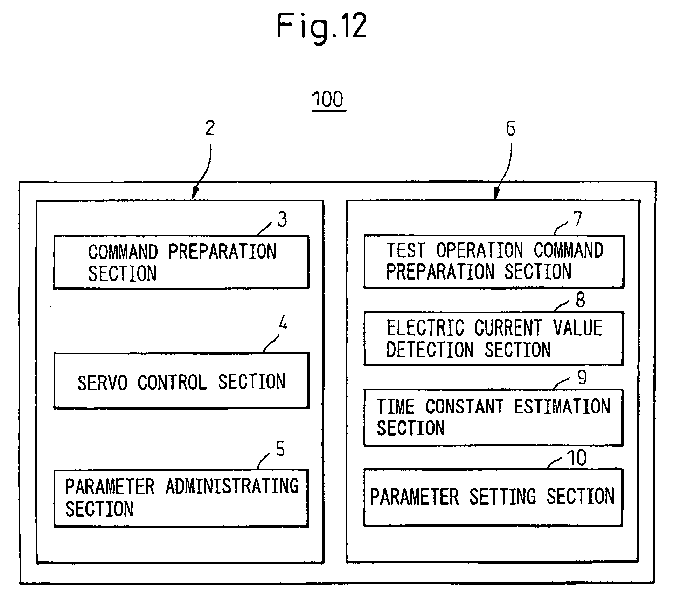

Although, in the present embodiment, the servo motor control system 1 is composed of NC control apparatus 2 and a time constant automatic estimation apparatus 6 connected to each other via a signal line, it is also possible compose a servo motor control system 100 from NC control apparatus 2 and the time constant automatic estimation apparatus 6 integrated into one unit, as shown in Fig. 12. When it is composed of NC control apparatus 2 and the time constant automatic estimation apparatus 6 as separate units as in the present embodiment, a personal computer may be used as the time constant automatic estimation apparatus 6.

While the invention has been described with reference to specific embodiments chosen for purpose of illustration, it should be apparent that numerous modifications could be made thereto, by those skilled in the art, without departing from the basic concept and scope of the invention.

## Claims

1.  A time constant automatic estimation method for automatically estimating a time constant at a time of acceleration of a servo motor (19),
    **characterized in that** the time constant automatic estimation method comprises:

    detecting a peak electric current value (P) when said servo motor (19) is operated in acceleration using a provisional time constant (T) provided in advance for a test operation; and
    estimating an actual time constant ($\tau$) when said servo motor (19) is actually driven at a desired target electric current value (A) at a time of an actual operation, from a relation between the peak electric current value (P) and said provisional time constant (T).

2.  A time constant automatic estimation method as claimed in claim 1,
    wherein said actual time constant ($\tau$) is estimated by an equation, $\tau = T/(A/P)$, wherein $\tau$ is the actual time constant, T is the provisional time constant, P is the peak electric current value detected at the time of the test operation using the provisional time constant, and A is a desired target electric current value supplied at the time of the actual operation.

3.  A time constant automatic estimation apparatus for automatically estimating a time constant at a time of acceleration of a servo motor (19),
    **characterized in that** the time constant automatic estimation apparatus comprises:

    an electric current value detection section (8) for detecting a peak electric current value (P) when said servo motor (19) is operated in acceleration using a provisional time constant (T) provided in advance for a test operation; and
    a time constant estimation section (9) for estimating a actual time constant ($\tau$) when said servo motor (19) is actually driven at a desired target electric current value (A) at a time of an actual operation, from a relation between said peak electric current value (P) and said provisional time constant (T).

4.  A time constant automatic estimation apparatus as claimed in claim 3,
    wherein said time constant estimation section (9) estimate the actual time constant ($\tau$) by an equation,

$$\tau = T/(A/P),$$

    where $\tau$ is the actual time constant, T is the provisional time constant, P is the peak electric current value detected at the time of the test operation using the provisional time constant, and A is a desired target electric current value supplied at the time of the actual operation.

**5.** A time constant automatic estimation apparatus as claimed in claim 3,
further comprising a second electric current value detection section for detecting a stationary electric current value (B) when said servo motor (19) is operated at a constant velocity,
wherein said peak electric current value (P) is rewritten into another peak electric current value by subtracting said stationary electric current value (B) from said peak electric current value (P),
wherein said desired target electric current value (A) is rewritten into another desired target electric current value by subtracting said stationary electric current value (B) from said desired target electric current value (A).

**6.** A time constant automatic estimation apparatus as claimed in claim 3,
further comprising a first determination section for determining whether or not said peak electric current value (P) reaches a permissible maximum electric current value of a servo amplifier (18), when the test operation of said servo motor (19) is performed using said actual time constant ($\tau$),
wherein, in a case where said first determination section has determined that said peak electric current value (P) reaches said permissible maximum electric current value of the servo amplifier (18), said actual time constant ($\tau$) is rewritten into another actual time constant by multiplying said actual time constant ($\tau$) by a predetermined coefficient until said peak electric current value (P) does not reach said permissible maximum electric current value, and in a case where said first determination section has determined that said peak electric current value (P) does not reach said permissible maximum electric current value of the servo amplifier (18), said actual time constant ($\tau$) is not rewritten.

**7.** A time constant automatic estimation apparatus as claimed in claim 3,
further comprising a second determination section for measuring a duration of the peak electric current value (P) reaching and remaining at a permissible maximum electric current value of a servo amplifier (18) in the test operation, and for determining whether or not the duration is less than a prescribed time, as the test operation of said servo motor (19) is performed using said actual time constant ($\tau$),
wherein, in a case where said first determination section has determined that said duration is equal to or greater than the prescribed time, said actual time constant ($\tau$) is rewritten into another actual time constant by multiplying said actual time constant ($\tau$) by a predetermined coefficient until said duration becomes less than said prescribed time, and in a case where said second determination section has determined that said duration is less than the prescribed time, said actual time constant ($\tau$) is not rewritten.

**8.** A time constant automatic estimation apparatus as claimed in claim 3,
further comprising a correction section for correcting said actual time constant ($\tau$),
wherein when a load inertia at the time of test operation differs from a load inertia at the time of actual operation, the correction section correct said actual time constant ($\tau$) in accordance with a ratio of load inertia at the time of said test operation to load inertia at the time of actual operation.

**9.** A servo motor control system comprising the time constant automatic estimation apparatus as claimed in 3.

# Fig.1

1

2

**COMMAND PREPARATION SECTION** 3

**SERVO CONTROL SECTION** 4

**PARAMETER ADMINISTRATING SECTION** 5

6

**TEST OPERATION COMMAND PREPARATION SECTION** 7

**ELECTRIC CURRENT VALUE DETECTION SECTION** 8

**TIME CONSTANT ESTIMATION SECTION** 9

**PARAMETER SETTING SECTION** 10

# Fig.2

# Fig.3

```
                    ┌─────────┐
                    │  START  │
                    └─────────┘
                         │
                         ▼
          ┌────────────────────────────┐
          │ SET DESIRED TARGET ELECTRIC │──── A1
          │ CURRENT (A)                 │
          └────────────────────────────┘
                         │
                         ▼
        ┌────────────────────────────────┐
        │ SEND PROVISIONAL TIME CONSTANT(T)│──── A2
        └────────────────────────────────┘
                         │
                         ▼
            ┌────────────────────────┐
            │ SEND OPERATING PROGRAM  │──── A3
            └────────────────────────┘
                         │
                         ▼
            ┌────────────────────────┐
            │ PREPARE TO ACQUIRE      │──── A4
            │ ELECTRIC CURRENT DATA   │
            └────────────────────────┘
                         │
                         ▼
            ┌────────────────────────┐
            │ PERFORM TEST OPERATION  │──── A5
            └────────────────────────┘
                         │
                         ▼
        ┌────────────────────────────────┐
        │ ACQUIRE ELECTRIC CURRENT DATA   │──── A6
        └────────────────────────────────┘
                         │
                         ▼
        ┌────────────────────────────────┐
        │ READ PEAK(P) OF ELECTRIC CURRENT│──── A7
        └────────────────────────────────┘
                         │
                         ▼
    ┌────────────────────────────────────────┐
    │ ESTIMATED TIME CONSTANT  τ=T/(A/P)      │──── A8
    └────────────────────────────────────────┘
                         │
                         ▼
    ┌────────────────────────────────────────┐
    │ SEND ESTIMATED TIME CONSTANT(τ)         │──── A9
    └────────────────────────────────────────┘
                         │
                         ▼
                    ┌─────────┐
                    │   END   │
                    └─────────┘
```

Fig.4A

Fig.4B

ELECTRIC CURRENT

MOTOR VELOCITY

ELECTRIC CURRENT COMMAND
OR
FEEDBACK ELECTRIC CURRENT

TIME

P

T

A

$\tau = T/(A/P)$

# Fig.5A

TEST OPERATION (TIME CONSTANT 300ms)

# Fig.5B

ACTUAL OPERATION (TIME CONSTANT 42ms)

EP 1 796 263 A1

# Fig.6

```
                    ( START )
                         │
                         ▼
        ┌──────────────────────────────┐
        │ SET DESIRED TARGET ELECTRIC  │──  B1
        │ CURRENT (A)                  │
        └──────────────────────────────┘
                         │
                         ▼
        ┌──────────────────────────────┐
        │ SEND PROVISIONAL TIME CONSTANT (T) │──  B2
        └──────────────────────────────┘
                         │
                         ▼
        ┌──────────────────────────────┐
        │ SEND OPERATING PROGRAM       │──  B3
        └──────────────────────────────┘
                         │
                         ▼
        ┌──────────────────────────────┐
        │ PREPARE TO ACQUIRE CURRENT DATA │──  B4
        └──────────────────────────────┘
                         │
                         ▼
        ┌──────────────────────────────┐
        │ PERFORM TEST OPERATION       │──  B5
        └──────────────────────────────┘
                         │
                         ▼
        ┌──────────────────────────────┐
        │ ACQUIRE ELECTRIC CURRENT DATA │──  B6
        └──────────────────────────────┘
                         │
                         ▼
        ┌──────────────────────────────┐
        │ READ PEAK (P) OF ELECTRIC CURRENT │──  B7
        └──────────────────────────────┘
                         │
                         ▼
        ┌──────────────────────────────┐
        │ READ STATIONARY ELECTRIC CURRENT │──  B8
        │ VALUE (B)                    │
        └──────────────────────────────┘
                         │
                         ▼
        ┌──────────────────────────────┐
        │ ESTIMATED TIME CONSTANT  τ =T/{(A-B)/(P-B)} │──  B9
        └──────────────────────────────┘
                         │
                         ▼
        ┌──────────────────────────────┐
        │ SEND ESTIMATED TIME CONSTANT (τ) │──  B10
        └──────────────────────────────┘
                         │
                         ▼
                    ( END )
```

ESTIMATED TIME CONSTANT $\tau = T / \{(A-B)/(P-B)\}$

# Fig.7A

ELECTRIC CURRENT

MOTOR VELOCITY

ELECTRIC CURRENT COMMAND
OR
FEEDBACK ELECTRIC CURRENT

P

B

TIME

T

# Fig.7B

A

B

$\tau = T / \{(A-B)/(P-B)\}$

EP 1 796 263 A1

# Fig.8

```
        ( START )
            │
            ▼
┌──────────────────────────┐
│ SET DESIRED TARGET ELECTRIC │ ─ C1
│ CURRENT (A)              │
└──────────────────────────┘
            │
            ▼
┌──────────────────────────┐
│ SEND PROVISIONAL TIME CONSTANT (T) │ ─ C2
└──────────────────────────┘
            │
            ▼
┌──────────────────────┐
│ SEND OPERATING PROGRAM │ ─ C3
└──────────────────────┘
            │
            ▼
┌────────────────────────────┐
│ PREPARE TO ACQUIRE CURRENT DATA │ ─ C4
└────────────────────────────┘
            │
            ▼
┌──────────────────────┐
│ PERFORM TEST OPERATION │ ─ C5
└──────────────────────┘
            │
            ▼
┌────────────────────────────┐
│ ACQUIRE ELECTRIC CURRENT DATA │ ─ C6
└────────────────────────────┘
            │
            ▼
┌──────────────────────────────┐
│ READ PEAK (P) OF ELECTRIC CURRENT │ ─ C7
└──────────────────────────────┘
            │
            ▼
┌──────────────────────────┐
│ READ STATIONARY ELECTRIC CURRENT │ ─ C8
│ VALUE (B)                │
└──────────────────────────┘
            │
            ▼
```

$$\text{ESTIMATED TIME CONSTANT } \tau 1 = T / \{(A-B)/(P-B)\} \quad - C9$$

```
            │
            ▼
┌──────────────────────────────┐
│ SEND ESTIMATED TIME CONSTANT (τ1) │ ─ C10
└──────────────────────────────┘
            │
            ▼◄───────────────────────┐
┌──────────────┐              ┌──────────────────┐ C13
│ PERFORM TEST │ ─ C11        │ CORRECTED TIME   │
│ OPERATION    │              │ CONSTANT τ2=CURRENT │
└──────────────┘              │ TIME CONSTANT × 1.05 │
            │                 └──────────────────┘
            ▼  C12                     ▲
        ╱────────╲                     │
       ╱ DOES PEAK OF ╲   YES          │
      ╱ ELECTRIC CURRENT REACH ╲───────┘
      ╲ PERMISSIBLE MAXIMUM ╱
       ╲ CURRENT VALUE ╱
        ╲    ?   ╱
            │
            │ NO
            ▼
        ( END )
```

# Fig.9A

ELECTRIC CURRENT

MOTOR VELOCITY

ELECTRIC CURRENT COMMAND
OR
FEEDBACK ELECTRIC CURRENT

TIME

# Fig.9B

PERMISSIBLE MAXIMUM
CURRENT VALUE
OF AMPLIFER

$\tau 1$

# Fig.9C

$\tau 2$

TIME CONSTANT EXTEND UNTIL
CURRENT NOT REACH PERMISSIBLE
MAXIMUM CURRENT VALUE OF AMPLIFER

EP 1 796 263 A1

# Fig.10

```
            ( START )
                │
                ▼
┌─────────────────────────────────┐
│ SET DESIRED TARGET ELECTRIC     │── D1
│ CURRENT (A)                     │
└─────────────────────────────────┘
                │
                ▼
┌─────────────────────────────────┐
│ SEND PROVISIONAL TIME CONSTANT(T)│── D2
└─────────────────────────────────┘
                │
                ▼
     ┌──────────────────────────┐
     │ SEND OPERATING PROGRAM   │── D3
     └──────────────────────────┘
                │
                ▼
   ┌──────────────────────────────┐
   │ PREPARE TO ACQUIRE CURRENT DATA│── D4
   └──────────────────────────────┘
                │
                ▼
      ┌──────────────────────────┐
      │ PERFORM TEST OPERATION   │── D5
      └──────────────────────────┘
                │
                ▼
   ┌──────────────────────────────┐
   │ ACQUIRE ELECTRIC CURRENT DATA │── D6
   └──────────────────────────────┘
                │
                ▼
┌─────────────────────────────────┐
│ READ PEAK(P) OF ELECTRIC CURRENT │── D7
└─────────────────────────────────┘
                │
                ▼
   ┌──────────────────────────────┐
   │ READ STATIONARY ELECTRIC      │── D8
   │ CURRENT VALUE(B)              │
   └──────────────────────────────┘
                │
                ▼
   ┌──────────────────────────────┐
   │ ESTIMATED TIME CONSTANT       │── D9
   │ τ1=T/{(A-B)/(P-B)}            │
   └──────────────────────────────┘
                │
                ▼
┌─────────────────────────────────┐
│ SEND ESTIMATED TIME CONSTANT(τ1) │── D10
└─────────────────────────────────┘
```

$$\tau 1 = T / \{ (A-B)/(P-B) \}$$ — D9

D14: CORRECTED TIME CONSTANT τ2=CURRENT TIME CONSTANT × 1.05

D11: PERFORM TEST OPERATION

D12: DOES PEAK OF ELECTRIC CURRENT REACH PERMISSIBLE MAXIMUM CURRENT VALUE ?

D13: IS DURATION WITHIN PRESCRIBED TIME ?

YES / NO

( END )

# Fig.11A

ELECTRIC CURRENT

MOTOR VELOCITY

ELECTRIC CURRENT COMMAND
OR
FEEDBACK ELECTRIC CURRENT

TIME

# Fig.11B

PERMISSIBLE MAXIMUM
CURRENT VALUE
OF AMPLIFER

←PRESCRIBED TIME

$\tau 1$

# Fig.11C

←PRESCRIBED TIME

$\tau 2$

TIME CONSTANT EXTEND UNTIL
DURATION OF PEEK CURRENT REACHING
AND REMAINING AT PERMISSIBLE
MAXIMUM CURRENT VALUE OF AMPLIFER
IS WITHIN PRESCRIBED TIME

EP 1 796 263 A1

# Fig.12

100

2                                          6

COMMAND PREPARATION
SECTION                          3

SERVO CONTROL SECTION          4

PARAMETER ADMINISTRATING
SECTION                          5

TEST OPERATION COMMAND
PREPARATION SECTION          7

ELECTRIC CURRENT VALUE
DETECTION SECTION          8

TIME CONSTANT ESTIMATION
SECTION          9

PARAMETER SETTING SECTION          10

**European Patent Office**

**EUROPEAN SEARCH REPORT**

Application Number

EP 06 02 5361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 44 11 128 A1 (OTIS ELEVATOR CO [US]) 6 April 1995 (1995-04-06) * page 5, lines 1-10; figures 6,8-10,14,16,17 * * page 8, lines 1-11 * | 1,3 | INV. H02P21/14 G05B13/02 G05B13/04 H02P23/00 |
| A | * page 8, lines 1-11 * * page 4, line 67 * ----- | 2,4-9 | |
| Y | JP 05 015186 A (FUJI ELECTRIC CO LTD) 22 January 1993 (1993-01-22) * abstract; figures 9-14 * | 1,3 | |
| Y | & DE 196 10 573 C1 (SIEMENS AG [DE]) 3 July 1997 (1997-07-03) * page 3, lines 54-67 * ----- | 1,3 | |
| Y | JP 08 083103 A (FUJI ELECTRIC CO LTD) 26 March 1996 (1996-03-26) * abstract; figures 1-3 * ----- | 1,3 | |
| Y | DE 196 10 573 C1 (SIEMENS AG [DE]) 3 July 1997 (1997-07-03) * page 3, lines 54-67; figure 6 * ----- | 1,3 | TECHNICAL FIELDS SEARCHED (IPC) H02P G05B |

The present search report has been drawn up for all claims

| Place of search | Date of completion of the search | Examiner |
|---|---|---|
| Munich | 26 February 2007 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 02 5361

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2007

| Patent document cited in search report | | Publication date | Patent family member(s) | | Publication date |
|---|---|---|---|---|---|
| DE 4411128 | A1 | 06-04-1995 | JP<br>JP<br>US | 3606899 B2<br>6321442 A<br>5476158 A | 05-01-2005<br>22-11-1994<br>19-12-1995 |
| JP 5015186 | A | 22-01-1993 | JP | 2964736 B2 | 18-10-1999 |
| DE 19610573 | C1 | 03-07-1997 | EP | 0797133 A1 | 24-09-1997 |
| JP 8083103 | A | 26-03-1996 | NONE | | |
| DE 19610573 | C1 | 03-07-1997 | EP | 0797133 A1 | 24-09-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005358016 A
- JP 2004074357 A
- JP 9149670 A